# EUROPEAN PATENT SPECIFICATION

(11) **EP 3 981 572 B1**
(45) Date of publication and mention of the grant of the patent: **14.06.2023**
(21) Application number: 21199162.5
(22) Date of filing: 27.09.2021
(51) Int. Cl.: B29C 45/73, B29C 33/04

(54) **MOLD COOLING STRUCTURE**
KÜHLSTRUKTUR FÜR FORMEN
STRUCTURE DE REFROIDISSEMENT DE MOULE

(30) Priority: 09.10.2020 JP 2020170940
(43) Date of publication of application: 13.04.2022
(73) Proprietor: TOYOTA JIDOSHA KABUSHIKI KAISHA, Toyota-shi, Aichi-ken, 471-8571 (JP)
(72) Inventor: TAKASAKA, Hironori, Toyota-shi 471-8571 (JP)
(74) Representative: J A Kemp LLP

(56) References cited:
- EP-A1- 2 433 776
- CN-A- 109 016 417
- CN-A- 110 815 720
- CN-U- 204 340 137
- CN-U- 205 033 539
- JP-A- H0 716 899
- JP-A- H02 188 222
- JP-A- S58 224 730
- JP-A- 2011 126 171
- JP-A- 2015 182 415
- US-A1- 2005 053 691

## Description

### BACKGROUND

The present disclosure relates to a mold cooling structure.

When a mold is used to mold an object to be molded, the mold becomes hot. Therefore, the mold is provided with a cooling structure that can cool the mold by causing a refrigerant such as cooling water, cooling oil, or the like to flow through the mold. For instance, Japanese Unexamined Patent Application Publication No. 2016-172401 discloses a technique of cooling a molded product and a mold by causing cooling water to flow into the mold.

CN 204340137U discloses a special cooling system for a plastic mold.

JP 2015182415A discloses a mold apparatus which comprises: a pair of openable/closable mold bodies which constitute a cavity into which a resin material is charged; a first temperature adjustment circuit and a second temperature adjustment circuit which are arranged in at least one mold body along the cavity and through which temperature adjustment medium is allowed to flow; and a temperature adjustment device which allows the temperature adjustment medium to flow simultaneously into the first and second temperature adjustment circuits.

JP 358224730A discloses a mold for injection molding a disk like product to which the first mold, the second mold, a cavity, the coolant passage for adjusting the temperature of the first mold, the coolant passage for adjusting the temperature of the second mold, a stamper, the ring mold member contacting the most outer peripheral edge face of the disk, etc. are provided, the coolant passage for adjusting the temperature independently from the coolant passages for adjusting the temperature of the first and second molds is provided to the ring mold which contacts the most outer peripheral edge face of the disk and it is controlled at the temperature different from these.

US 2005/0053691 discloses an injection-moulding tool for the production of a mould in disc form, in particular in the form of information carriers such as CDs and/or DVDs, wherein the injection-moulding tool comprises a first and a second mirror block, wherein the first and second mirror blocks lie opposite each other and are movable in relation to each other for the opening and closing of the mould, and means for actively controlling the temperature of at least one of the first and second mirror blocks.

EP 2433776A1 discloses a method involving passing a hot carbon dioxide gas between the regions in the molding tool along top-to-bottom direction. The hot carbon dioxide gas is passed between the regions in the molding tool along bottom-to-top direction. The regions are partially overlapped with each other. The angle between flow directions of hot carbon dioxide gas at the overlapping region is more than 90[deg].

CN205033539U discloses an injection mold's counter -flow cooling device which characterized in that: including cope match -plate pattern, lower bolster, outer heat exchange tube and inlayer heat exchange tube, the utility model has the advantages of the heat exchange tube design of double -deck alternating expression, the effectual heat exchange efficiency who improves cooling device, and cold flow of fluid opposite direction in the two -layer heat exchange tube make the mould heat dissipation even, and this practical structure is simple simultaneously, and reasonable in design has improved a quality of moulding.

CN109016417A discloses a concentric-square-shaped cooling device for an injection mold.

JP2011126171A discloses a mold thermostat comprising (1) first piping, with an introduction orifice and a discharge orifice, through which a temperature control fluid circulates internally, (2) a temperature control part which is installed at a plurality of spots inside the mold and is connected with the first piping, through which the supply of the temperature control fluid to the temperature control part and the discharge of the fluid from the temperature control part, can be achieved, and (3) second piping which is equipped with an introduction orifice and a discharge orifice, and makes an internal circulation of the temperature control fluid for controlling the temperature of the temperature control fluid inside the first piping. In addition, the second piping is externally fitted to the first piping as a sleeve.

JPH02188222A discloses a method to prevent a molded product from a warp deformation by cooling uniformly and improving dimensional accuracy of the molded product, by a method wherein a cooling medium is led to a cooling passage arranged close by a cavity and a sectional area of the cooling passage is formed in a tapered state extending toward an outlet side from an inlet side of the cooling passage.

JPH0716899A discloses a mold capable of sufficiently flowing a heat medium, shortening the cooling period of a molding, and readily controlling the mold to a predetermined mold temperature.

CN110815720A discloses a transverse single-hole water way of an injection mold and a water separating device of the transverse single-hole water way. The transverse single-hole water way comprises a transverse water separating plate and a transverse single-hole water way.

### SUMMARY

As described above, the mold can be cooled by flowing a refrigerant such as cooling water, cooling oil, or the like through a flow channel provided in the mold. However, with the technique disclosed in Japanese Unexamined Patent Application Publication JP 2016 172401 A, when a refrigerant flows through the flow channel in one direction, the temperature of the refrigerant rises as the refrigerant flows through the flow channel. This causes a problem that the part of the mold (that is, the cooling target), which is distant from the inflow port of the refrigerant, is not sufficiently cooled.

An object of the present disclosure is to provide a mold cooling structure that can exhibit a cooling performance even for the part of the mold that is distant from the inflow port of the refrigerant.

A mold cooling structure to cool a heating surface according to the present disclosure includes: a first refrigerant flow channel through which a first refrigerant for cooling a mold flows; and a second refrigerant flow channel through which a second refrigerant for cooling the first refrigerant flowing through the first refrigerant flow channel flows, in which the second refrigerant flow channel is disposed further distant from the heating surface than the first refrigerant flow channel, the first refrigerant flow channel and the second refrigerant flow channel are formed by disposing a partition in one penetrating hole, the second refrigerant flow channel extending along the first refrigerant flow channel, mutual heat exchange between the first refrigerant and the second refrigerant is performable via the partition, the first refrigerant and the second refrigerant flow in directions opposite to each other, an inflow port into which the refrigerant that flows through the first refrigerant flow channel flows and discharge port out from which the refrigerant that flows through the second refrigerant flow channel is discharged are provided adjacent to each other with the partition disposed between the inflow port and the discharge port, a cross-sectional area of the inflow port of the first refrigerant flow channel is larger than a cross-sectional area of the discharge port of the second refrigerant flow channel and an inflow port into which the refrigerant that flows through the second refrigerant flow channel flows and a discharge port out from which the refrigerant that flows through the first refrigerant flow channel is discharged are provided adjacent to each other with the partition disposed between the inflow port and the discharge port, a cross- sectional area of the inflow port of the second refrigerant flow channel is larger than a cross-sectional area of the discharge port of the first refrigerant flow channel.

According to the present disclosure, a mold cooling structure that can exhibit a cooling performance even for the part of the mold that is distant from the inflow port of the refrigerant.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic diagram of a mold cooling structure according to a first embodiment;
Fig. 2A is a cross-sectional diagram of a refrigerant flow channel according to a first embodiment of the present disclosure;
Fig. 2B is a cross-sectional diagram of the refrigerant flow channel according of the first embodiment of the present disclosure; and
Fig. 3 is a schematic diagram of a mold cooling structure according to a prior art.

### DESCRIPTION OF EMBODIMENTS

Hereinbelow, the embodiments of the present disclosure will be described with reference to the drawings. Note that since the drawings are simplified, the technical scope of the embodiments should not be construed narrowly on the basis of these drawings. In the drawings, the identical reference symbols denote identical structural elements and the redundant explanation thereof is omitted. Further, in the following embodiments, when referring to the number of elements or the like (including the number, the numerical value, the quantity, the range, and the like), the number is not limited to that specified, that is, the number is neither greater or smaller than the specified number except in the case of where the number is limited to a specific number.

Hereinbelow, for the sake of clarifying the explanation, the XYZ 3D-orthogonal coordinate system is used. Y-direction is the thickness direction of a mold. XZ-plane is a plane that is parallel to the main surface of the mold. Hereinbelow, the explanation will be given on the assumption that the positive Y-direction is the top-side direction, however, it may vary depending on the orientation of the mold.

### <Details of study on conceiving the mold cooling structure according to the embodiments>

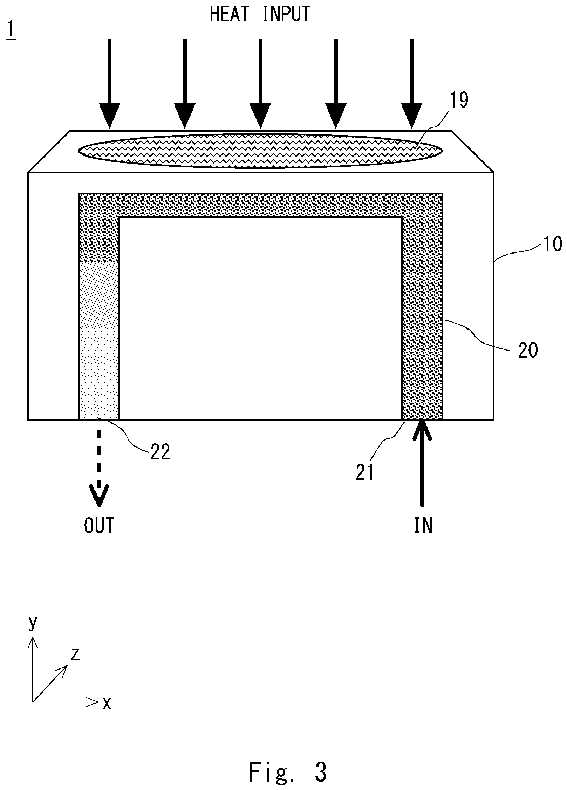

As a premise for describing the structure according to the present disclosure, the problems of the related art will be described with reference to Fig. 3. Fig. 3 is a schematic diagram of a core 10 of a mold 1 including a refrigerant flow channel. An unillustrated cavity is formed on the top side (positive Y-side) of the core 10. By injecting a material such as resin that forms the base of the mold into a hollow space configured of the core 10 and the cavity, the molded product is formed. At this time, as shown in Fig. 3, the core 10 is heated from the top side (the positive Y-direction) thereof by the melted resin or the like to thereby form a heating surface 19.

A refrigerant flow channel 20 is disposed inside the core 10. Although the refrigerant flow channel 20 is not usually visible from the outside, it is illustrated intentionally in Fig. 3 for the sake of describing the state of the refrigerant flow channel 20.

The core 10 of the mold 1 causes the refrigerant to flow into the mold 1 in order to cool the heating surface 19, whereby the molded product and the mold 1 are cooled. As shown in Fig. 3, the refrigerant flow channel 20 is disposed inside the core 10 of the mold 1, and the refrigerant flows therethrough. In Fig. 3, the refrigerant flows into the refrigerant flow channel 20 through an inflow port 21 and is discharged from the refrigerant flow channel 20 through a discharge port 22.

As shown in Fig. 3, when a refrigerant flows through the refrigerant flow channel 20, the temperature of the refrigerant rises as the refrigerant flows through the refrigerant flow channel from the inflow port 21 to the discharge port 22. Therefore, the cooling effect cannot be achieved for the part of the refrigerant flow channel 20 that is close to the discharge port 22. That is, it is difficult to achieve the effect of cooling by the refrigerant for the part of the core 10 of the mold 1 on the negative X-side of the heating surface 19. Further, due to the temperature of the refrigerant flow channel 20 rising, for instance, film boiling occurs inside the refrigerant flow channel 20, causing damage to the refrigerant flow channel 20 itself.

Thus, the mold cooling structure according to the embodiments described below that can solve the aforementioned problem was conceived.

### <First Embodiment>

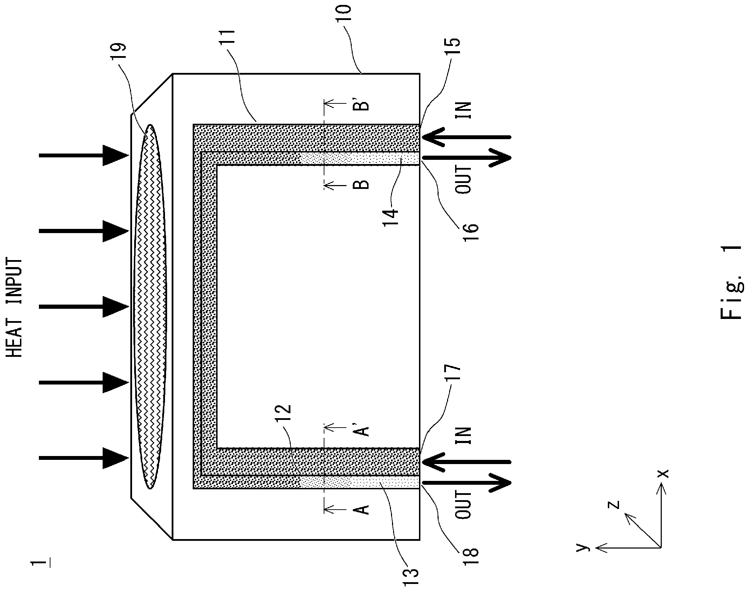

A mold cooling structure according to a first embodiment will be described with reference to Fig. 1. Fig. 1 is a schematic diagram of the core 10 of the mold 1 provided with a penetrating hole 11 through which the refrigerant flows. The penetrating hole 11 is disposed inside the core 10. Although the penetrating hole 11 is not usually visible from the outside, it is illustrated intentionally in Fig. 1 for the sake of describing the state of the penetrating hole 11.

As the refrigerant that flows through the penetrating hole 11 disposed inside the core 10 of the mold 1, a heat medium such as cooling oil, cooling water, or the like is employed.

In the first embodiment, the penetrating hole 11 is described as circular in cross-section, but it is not limited thereto and may be, for instance, rectangular. The shape of the penetrating hole 11 in cross-section may be any shape as long as the refrigerant can flow through the penetrating hole 11. In the first embodiment, two refrigerant flow channels 13 and 14 are formed by providing a partition 12 in the penetrating hole 11. The partition 12 can be collectively referred to as, for instance, a reinforcing part, a support part, a protruding part, a wall, and a plate. Further, the partition 12 is formed of, for instance, the material same as that of the rest of the core and is laminated on the penetrating hole 11, but it is not limited thereto and the partition 12 may be fixed to the wall of the penetrating hole 11.

As shown in Fig. 1, the first refrigerant flow channel 13 and the second refrigerant flow channel 14 are formed by providing the partition 12 in the penetrating hole 11. The first refrigerant flow channel 13 and the second refrigerant flow channel 14 can perform heat exchange with each other. Note that in the first embodiment, the first refrigerant flow channel 13 and the second refrigerant flow channel 14 are separated by the partition 12, however it is not limited thereto and the first refrigerant flow channel 13 and the second refrigerant flow channel 14 may be configured as independent channels as long as they can be perform heat exchange.

As shown in Fig. 1, the second refrigerant flow channel 14 extends along the first refrigerant flow channel 13 with the partition 12 disposed between the first refrigerant flow channel 13 and the second refrigerant flow channel 14. Further, the first refrigerant flow channel 13 is partitioned so that it is disposed on the side closer to the heating surface 19 of the core 10 than the second refrigerant flow channel 14. That is, the refrigerant that flows through the first refrigerant flow channel 13 (a first refrigerant) has a role of cooling the mold 1 and the molded product.

Further, as shown in Fig. 1, the second refrigerant flow channel 14 is partitioned so that it is disposed further distant from the heating surface 19 of the core 10 than the first refrigerant flow channel 13 is. That is, the refrigerant that flows through the second refrigerant flow channel 14 (a second refrigerant) has a role of cooling the mold 1 and the molded product.

In the first embodiment, the refrigerant that flows through the first refrigerant flow channel 13 and the refrigerant that flows through the second refrigerant flow channel 14 flow in directions opposite to each other as shown by the arrows in Fig. 1. That is, the first inflow port 15 into which the refrigerant that flows through the first refrigerant flow channel 13 flows and the second discharge port 16 out from which the refrigerant that flows through the second refrigerant flow channel 14 is discharged are provided adjacent to each other with the partition 12 disposed between the first inflow port 15 and the second discharge port 16. Further, the second inflow port 17 into which the refrigerant that flows through the second refrigerant flow channel 14 flows and the first discharge port 18 out from which the refrigerant that flows through the first refrigerant flow channel 13 is discharged are provided adjacent to each other with the partition 12 disposed between the second inflow port 17 and the first discharge port 18.

The partition 12 disposed between the first refrigerant flow channel 13 and the second refrigerant flow channel 14 is configured so that mutual heat exchange can be performed between the refrigerant that flows through the first refrigerant flow channel 13 and the refrigerant that flows through the second refrigerant flow channel 14. By performing heat exchange between the respective refrigerants flowing in the directions opposite to each other, it is possible to suppress rise in the temperature of the refrigerant present in the first refrigerant flow channel 13 even at a position of the first refrigerant flow channel 13 that is distant from the first inlet port 15. This is because the refrigerant that flows through the second refrigerant flow channel 14 is prone to absorb heat from the refrigerant that flows through the first refrigerant flow channel 13. That is, it is easy to achieve the effect of cooling by the refrigerant for the part of the core 10 of the mold 1 on the negative X-side.

Further, by adjusting the thickness of the partition 12, the degree of the heat exchange performed between the refrigerant that flows through the first refrigerant flow channel 13 and the refrigerant that flows through the second refrigerant flow channel 14 can be adjusted whereby the cooling efficiency of the first refrigerant flow channel 13 with respect to the mold 1 and the mold product can be adjusted.

Further, as shown in Fig. 1, by adjusting the position of the partition 12 disposed between the first refrigerant flow channel 13 and the second refrigerant flow channel 14, it is possible to suppress rise in the temperature of the refrigerant present in the first refrigerant flow channel 13 even more at a position of the first refrigerant flow channel 13 that is distant from the first inlet port 15.

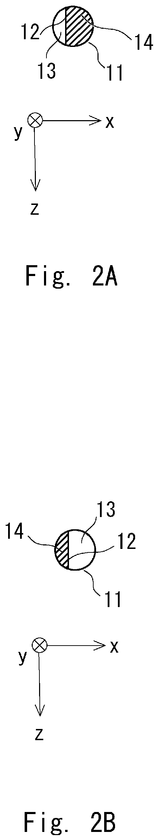

Fig. 2A is a cross-section of Fig. 1 cut along the line A-A' and Fig. 2B is a cross-section of Fig. 1 cut along the line B-B'. In Fig, 2A, the refrigerant that flows through the first refrigerant flow channel 13 flows in the negative Y-direction and the refrigerant that flows through the second refrigerant flow channel 14 flows in the positive Y-direction. Further, in Fig. 2B, the refrigerant that flows through the first refrigerant flow channel 13 flows in the positive Y-direction and the refrigerant that flows through the second refrigerant flow channel 14 flows in the negative Y-direction.

For example, as shown in Figs. 1, 2A, and 2B, a cross-sectional area of the first inflow port 15 into which the refrigerant that flows through the first refrigerant flow channel 13 flows is made larger than a cross-sectional area of the second discharge port 16 out from which the refrigerant that flows through the second refrigerant flow channel 14 is discharged, and the cross-sectional area of the second discharge port 16 out from which the refrigerant that flows through the second refrigerant flow channel 14 is discharged is made smaller than the cross-sectional area of the first inflow port 15 into which the refrigerant that flows through the first refrigerant flow channel 13 flows. Further, a cross-sectional area of the second inflow port 17 into which the refrigerant that flows through the second refrigerant flow channel 14 flows is made larger than a cross-sectional area of the first discharge port 18 out from which the refrigerant that flows through the first refrigerant flow channel 13 is discharged, and the cross-sectional area of the first discharge port 18 out from which the refrigerant that flows through the first refrigerant flow channel 13 is discharged is made smaller than the cross-sectional area of the second inflow port 17 into which the refrigerant that flows through the second refrigerant flow channel 14 flows. The smaller the respective cross-sectional areas of the refrigerant flow channels 13 and 14, the faster the flow rate of the refrigerant that flows through each of the refrigerant flow channels 13 and 14 becomes.

As described above, by disposing the partition 12 so as to vary the cross-sectional areas of the refrigerant flow channels, the flow rate of the refrigerant that flows through each of the refrigerant flow channels 13 and 14 can be increased for the respective parts of the refrigerant flow channels 13 and 14 where the temperature of the refrigerant has increased whereby it is possible to further suppress rise in the temperature of the refrigerant. Further, the flow rate of the refrigerant is small in the respective parts of the refrigerant flow channels 13 and 14 where the temperature of the refrigerant flowing therethrough has not increased.

According to the first embodiment, it is possible to provide a mold cooling structure that can exhibit a cooling performance even for the part of the mold that is distant from the inflow port of the refrigerant.

### <Other Embodiments>

In the first embodiment, one pair of the first refrigerant flow channel 13 and the second refrigerant flow channel 14 are disposed inside the core 10 of the mold 1, however two or more pairs of the same may be disposed. Further, the first refrigerant flow channel 13 and the second refrigerant flow channel 14 may be disposed inside the cavity (not shown) of the mold 1.

The present disclosure has been described according to the aforementioned embodiment. However, the present disclosure is not limited to the configuration described in the aforementioned embodiments and can be naturally changed, modified, or combined variously within the scope of the claims of the present application by one skilled in art.

## Claims

1. A mold cooling structure to cool a heating surface (19) comprising:
a first refrigerant flow channel (13) through which a first refrigerant for cooling a mold (1) flows; and
a second refrigerant flow channel (14) through which a second refrigerant for cooling the first refrigerant flowing through the first refrigerant flow channel (13) flows, wherein the second refrigerant flow channel (14) is disposed further distant from the heating surface (19) than the first refrigerant flow channel (13),
the first refrigerant flow channel (13) and the second refrigerant flow channel (14) are formed by disposing a partition (12) in one penetrating hole (11), the second refrigerant flow channel (14) extending along the first refrigerant flow channel (13),
mutual heat exchange between the first refrigerant and the second refrigerant is performable via the partition (12), the first refrigerant and the second refrigerant flow in directions opposite to each other,
an inflow port (15) into which the refrigerant that flows through the first refrigerant flow channel (13) flows and a discharge port (16) out from which the refrigerant that flows through the second refrigerant flow channel (14) is discharged are provided adjacent to each other with the partition (12) disposed between the inflow port (15) and the discharge port (16) a cross-sectional area of the inflow port (15) of the first refrigerant flow channel (13) is larger than a cross-sectional area of the discharge port (16) of the second refrigerant flow channel (14), and
an inflow port (17) into which the refrigerant that flows through the second refrigerant flow channel (14) flows and a discharge port (18) out from which the refrigerant that flows through the first refrigerant flow channel (13) is discharged are provided adjacent to each other with the partition (12) disposed between the inflow port (17) and the discharge port (18), a cross-sectional area of the inflow port (17) of the second refrigerant flow channel (14) is larger than a cross-sectional area of the discharge port (18) of the first refrigerant flow channel (13).

## Patentansprüche

1. Formkühlungsstruktur zum Kühlen einer Heizfläche (19), die Folgendes umfasst:
einen ersten Kältemittelströmungskanal (13), durch den ein erstes Kältemittel zur Kühlung einer Form (1) strömt; und
einen zweiten Kältemittelströmungskanal (14), durch den ein zweites Kältemittel zum Kühlen des durch den ersten Kältemittelströmungskanal (13) strömenden ersten Kältemittels strömt, wobei der zweite Kältemittelströmungskanal (14) weiter von der Heizfläche (19) entfernt angeordnet ist als der erste Kältemittelströmungskanal (13),
wobei der erste Kältemittelströmungskanal (13) und der zweite Kältemittelströmungskanal (14) durch Anordnen einer Trennwand (12) in einem Durchgangsloch (11) gebildet werden, wobei sich der zweite Kältemittelströmungskanal (14) entlang des ersten Kältemittelströmungskanals (13) erstreckt,
wobei ein gegenseitiger Wärmeaustausch zwischen dem ersten Kältemittel und dem zweiten Kältemittel über die Trennwand (12) durchführbar ist, wobei das erste Kältemittel und das zweite Kältemittel in entgegengesetzten Richtungen fließen,
wobei eine Einströmöffnung (15), in die das durch den ersten Kältemittelströmungskanal (13) strömende Kältemittel einströmt, und eine Ausströmöffnung (16), aus der das durch den zweiten Kältemittelströmungskanal (14) strömende Kältemittel ausströmt, benachbart zueinander vorgesehen sind, wobei bei der Trennwand (12), die zwischen der Einströmöffnung (15) und der Ausströmöffnung (16) angeordnet ist, eine Querschnittsfläche der Einströmöffnung (15) des ersten Kältemittelströmungskanals (13) größer ist als eine Querschnittsfläche der Ausströmöffnung (16) des zweiten Kältemittelströmungskanals (14), und
wobei eine Einströmöffnung (17), in die das durch den zweiten Kältemittelströmungskanal (14) strömende Kältemittel einströmt, und eine Ausströmöffnung (18), aus der das durch den ersten Kältemittelströmungskanal (13) strömende Kältemittel ausströmt, benachbart zueinander vorgesehen sind, wobei bei der Trennwand (12), die zwischen der Einströmöffnung (17) und der Ausströmöffnung (18) angeordnet ist, eine Querschnittsfläche der Einströmöffnung (17) des zweiten Kältemittelströmungskanals (14) größer ist als eine Querschnittsfläche der Ausströmöffnung (18) des ersten Kältemittelströmungskanals (13).

## Revendications

1. Structure de refroidissement de moule pour refroidir une surface chauffante (19) comprenant :
un premier canal d'écoulement de réfrigérant (13) à travers lequel un premier réfrigérant pour refroidir un moule (1) s'écoule ; et
un deuxième canal d'écoulement de réfrigérant (14) à travers lequel un deuxième réfrigérant pour refroidir le premier réfrigérant s'écoulant à travers le premier canal d'écoulement de réfrigérant (13) s'écoule, dans lequel le deuxième canal d'écoulement de réfrigérant (14) est disposé plus loin de la surface chauffante (19) que le premier canal d'écoulement de réfrigérant (13),
le premier canal d'écoulement de réfrigérant (13) et le deuxième canal d'écoulement de réfrigérant (14) sont formés en disposant une cloison (12) dans un trou de pénétration (11), le deuxième canal d'écoulement de réfrigérant (14) s'étendant le long du premier canal d'écoulement de réfrigérant (13),
un échange de chaleur mutuel entre le premier réfrigérant et le deuxième réfrigérant peut être réalisé via la cloison (12), le premier réfrigérant et le deuxième réfrigérant s'écoulent dans des directions opposées l'une à l'autre,
un orifice d'entrée (15) dans lequel s'écoule le réfrigérant qui s'écoule à travers le premier canal d'écoulement de réfrigérant (13) et un orifice de décharge (16) à partir duquel le réfrigérant qui s'écoule à travers le deuxième canal d'écoulement de réfrigérant (14) est déchargé sont disposés adjacents l'un à l'autre avec la cloison (12) disposée entre l'orifice d'entrée (15) et l'orifice de décharge (16), une surface de section transversale de l'orifice d'entrée (15) du premier canal d'écoulement de réfrigérant (13) est supérieure à une surface de section transversale de l'orifice de décharge (16) du deuxième canal d'écoulement de réfrigérant (14), et
un orifice d'entrée (17) dans lequel le réfrigérant qui s'écoule à travers le deuxième canal d'écoulement de réfrigérant (14) s'écoule et un orifice de décharge (18) à partir duquel le réfrigérant qui s'écoule à travers le premier canal d'écoulement de réfrigérant (13) est déchargé sont disposés adjacents l'un à l'autre avec la cloison (12) disposée entre l'orifice d'entrée (17) et l'orifice de décharge (18), une surface de section transversale de l'orifice d'entrée (17) du deuxième canal d'écoulement de réfrigérant (14) est plus grande qu'une surface de section transversale de l'orifice de décharge (18) du premier canal d'écoulement de réfrigérant (13).
